# EUROPEAN PATENT SPECIFICATION

(11) **EP 4 069 984 B1**
(45) Date of publication and mention of the grant of the patent: **17.09.2025**
(21) Application number: 20896626.7
(22) Date of filing: 04.12.2020
(51) Int. Cl.: F16B 19/02, F16B 5/02, F16B 5/00, F16B 41/00

(54) **FASTENER WITH ATTACHED COMPRESSION LIMITING SLEEVE**
BEFESTIGUNGSELEMENT MIT ANGEBRACHTER DRUCKBEGRENZUNGSHÜLSE
ÉLÉMENT DE FIXATION POURVU D'UN MANCHON SOLIDARISÉ DE LIMITATION DE COMPRESSION

(30) Priority: 05.12.2019 US 201916704932
(43) Date of publication of application: 12.10.2022
(73) Proprietor: Acument Intellectual Properties LLC, Sterling Heights, MI 48314 (US)
(72) Inventor: SLATER, Jeramiah, Grand Blanc, Michigan 48439 (US); NIEC, Robert A., Burt, Michigan 48417 (US); PURDY, Paul, Holly, Michigan 48442 (US); SIFFERMAN, Gary, Grand Blanc, Michigan 48439 (US)
(74) Representative: Elzaburu S.L.P.
(86) International application number: PCT/US2020/063247
(87) International publication number: WO 2021/113600

(56) References cited:
- WO-A1-2013/085790
- US-A- 6 059 503
- US-A- 6 059 503
- US-A1- 2005 117 997
- US-A1- 2008 095 593
- US-A1- 2010 202 856
- US-A1- 2013 142 588
- US-A1- 2014 161 562
- US-A1- 2019 107 139
- US-B1- 6 457 925
- US-B2- 9 587 664

## Description

### Related Application (Priority Claim)

The present application claims the benefit of United States Patent Application Serial No. 16/704,932, filed December 5, 2019.

### Background

The present invention generally relates to fasteners, and more specifically relates to a fastener system that has a compression-limiting sleeve effectively attached to a fastener.

In a fastener application where there is a need to limit compression, a conventional fastener system provides that a compression limiting member, such as a stamped sleeve or bushing, is staked to a threaded fastener. The sleeve or bushing, with the threaded fastener staked thereto, is then inserted into a hole which is provided in a first workpiece, and subsequently the fastener is threaded into a threaded bore which is provided in a second workpiece. This secures the first workpiece to the second workpiece, and provides that the sleeve or bushing absorbs compressive forces that otherwise would have to be absorbed by the first workpiece.

Disadvantages of such a fastener system include the fact that staking requires a secondary operation. Additionally, stamping the sleeve or bushing results in significant scrap and provides that tolerances cannot be closely controlled. Furthermore, the system does not readily provide that the column strength of the sleeve or bushing can be changed merely by altering the wall thickness or hardness of the sleeve or bushing.

It is known document WO2013/085790 disclosing a fastener system that includes a fastener, a compressing sleeve and a retainer which generally retains the compression-limiting sleeve on the fastener. By providing that the compression-limiting sleeve is not staked to the fastener, existing technology can he used, and no extra staking processing step needs to be performed.

### Summary

An object of an embodiment of the present invention is to provide an improved fastener system for use in an application where compression is relevant or must be absorbed.

The invention is set out in the appended set of claims.

Briefly, an embodiment of the present invention provides a fastener system that includes a fastener, such as a threaded bolt or screw, a compression-limiting sleeve, and a retainer which generally retains the compression-limiting sleeve on the fastener. By providing that the compression-limiting sleeve is not staked to the fastener, existing technology can be used, and no extra staking processing step needs to be performed.

### Brief Description of the Drawings

The organization and manner of the structure and operation of the invention, together with further objects and advantages thereof, may best be understood by reference to the following description taken in connection with the accompanying drawings wherein like reference numerals identify like elements in which:
Figure 1 is a cross-sectional view of a fastener system which is in accordance with a known embodiment of the state of the art;
Figure 2 is a perspective view of a retainer component of the fastener system shown in Figure 1;
Figure 3 is a cross-sectional view much like Figure 1, but shows the fastener system in the installed state;
Figures 4 and 6 are cross-sectional views of fastener systems that are in accordance with an embodiment of the invention.
Figure 5 is a cross-sectional view of a fastener system which is not covered by the claims.

### Description of Illustrated Embodiments

While this invention may be susceptible to embodiment in different forms, there are shown in the drawings and will be described herein in detail, specific embodiments with the understanding that the present disclosure is to be considered an exemplification of the principles of the invention, and is not intended to limit the invention to that as illustrated.

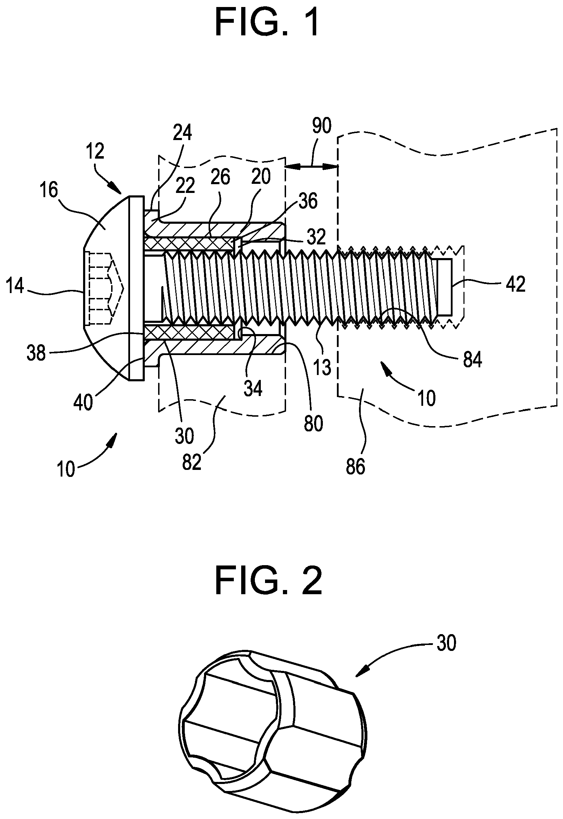

Figure 1 illustrates a fastener system 10 which is configured for use in applications where limiting compression is relevant. Specifically, the fastener system 10 comprises a fastener 12, such as a conventional threaded screw or bolt, having a threaded shaft portion 13. The fastener 12 is preferably formed of metal, and preferably incorporates a drive system (such as a recess 14 on a head 16 of the fastener 12) to transfer tightening torque, such as a drive system consistent with that which is disclosed in United States Patent No. 3,584,667, for example. While the fastener 12 is shown as having a head 16 with a recess 14, the present invention can be employed with effectively any head style with regard to the fastener 12.

The fastener system 10 also comprises a compression-limiting sleeve 20. Preferably, the compression-limiting sleeve 20 is also formed of metal, and is preferably cold headed as opposed to being stamped. This not only results in significantly less scrap, but also provides that both the outer diameter and the inner diameter of the compression-limiting sleeve 20 can be formed to a tight tolerance. Preferably, the compression-limiting sleeve 20 is generally cylindrical, but may include a lip 22 at one end 24 thereof as shown in Figure 1. As shown, the compression-limiting sleeve 20 also preferably includes an internal counter bore 26. The function of this counter bore 26 will be described more fully hereinbelow. Preferably, the compression-limiting sleeve 20 has a minimum bearing surface which is engineered to effectively meet the strength of the fastener 12 being used in the system 10. While the compression-limiting sleeve 20 is shown as having a lip 22, the present invention can be employed with or without the lip 22.

As shown in Figure 1, the fastener system 10 also comprises a retainer 30. The retainer 30 is configured to generally retain the compression-limiting sleeve 20 on the fastener 12, without having to physically stake the compression-limiting sleeve 20 to the fastener 12. Preferably, the retainer 30 is formed of a thermoplastic elastomer or another suitable material. Specifically, the retainer 30 may have a profile as shown in Figure 2, and specifically may be provided as being consistent with that which is disclosed in United States Patent No. 5,395,194; Reissue No. 36,164; and United States Patent No. 6,039,525. As shown in Figure 1, the fastener 12 extends through the retainer 30, and the retainer 30 is disposed generally between the fastener 12 and the compression-limiting sleeve 20.

Preferably, the retainer 30 retains the fastener 12 relative to the compression-limiting sleeve 20 such that the fastener 12 can float longitudinally, such as at least 1 mm, to facilitate alignment during installation.

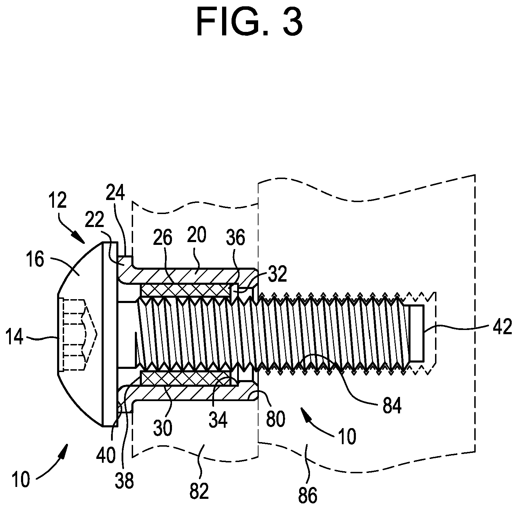

As discussed briefly above, the compression-limiting sleeve 20 preferably includes a counter bore 26. The space 32 between an internal shoulder 34 of the counter bore 26 of the compression-limiting sleeve 20 and the one end 36 of the retainer 30 assures that the other end 38 of the retainer 30 will be below an end surface 40 of the compression-limiting sleeve 20 once the fastener system 10 is installed, as shown in Figure 3 which is a cross-sectional view much like Figure 1, but shows the fastener system 10 post installation.

To install the fastener system 10, the compression-limiting sleeve 20, while being retained on the fastener 12 by the retainer 30, is inserted in a hole 80 in a first workpiece 82 (see Figure 1). Then, an end 42 of the fastener 12 is aligned with a threaded bore 84 in a second workpiece 86. A driver is engaged with the recess 14 in the head 16 of the fastener 12, and the driver is actuated to drive the fastener 12 into the second workpiece, thereby effectively securing the second workpiece to the first workpiece (as indicated by arrow 90 in Figure 1), as shown in Figure 3. During and after installation, the compression-limiting sleeve limits or absorbs compressive forces which otherwise would impact the first workpiece.

As discussed above, preferably the compression-limiting sleeve 20 is cold headed as opposed to being stamped. This not only results in significantly less scrap, but also provides that the compression-limiting sleeve 20 can be formed to tighter tolerances. Additionally, because the retainer 30 functions to retain the compression-limiting sleeve 20 on the fastener 12 as opposed to the compression-limiting sleeve 20 having to be staked on the fastener 12, a secondary staking operation need not be performed and existing technology can be utilized to assemble and hold the components of the fastener system 10 together. Furthermore, the fastener system 10 provides that the column strength of the compression-limiting sleeve 20 can be easily matched to the application by varying the wall thickness or hardness (or both) of the compression-limiting sleeve 20.

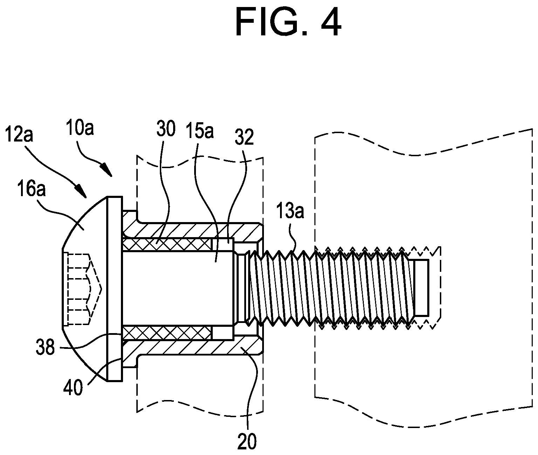

Figures 4-6 are cross-sectional views of fastener systems 10a, 10b, 10c. The fastener systems 10a, 10b, 10c have a lot of similarities with the fastener system 10 described previously, so like reference numerals will be used to identify like parts and only the differences will be emphasized.

Figure 4 illustrates a fastener system 10a that is very much like fastener system 10 described previously (shown in Figures 1-3), the only difference being in addition to having a head 16a and a threaded portion 13a, the fastener 12a also includes a non-threaded portion 15a. As shown in Figure 4, it is the non-threaded portion 15a of the fastener 12a that engages the retainer 30 (i.e., the same retainer 30 as described previously), for the purpose of generally retaining the compression-limiting sleeve 20 on the fastener 12a. Much like the fastener 12, the fastener 12a extends through the retainer 30, and the retainer 30 is disposed generally between the fastener 12a and the compression-limiting sleeve 20.

The retainer 30 retains the fastener 12a (i.e., by engaging the non-threaded portion 15a) relative to the compression-limiting sleeve 20 such that the fastener 12a can float longitudinally, such as at least 1 mm, to facilitate alignment during installation. As with the fastener system 10, fastener system 10a provides space 32, and this space 32 assures that end 38 of the retainer 30 will be below an end surface 40 of the compression-limiting sleeve 20 once the fastener system 10a is installed (i.e., like shown in Figure 3).

The fastener system 10a shown in Figure 4 provides enhanced retention compared to fastener system 10 due to the fact that there is more contact area between the non-threaded portion 15a of the fastener 12a and the retainer 30 than there is between the threaded portion 13 of fastener 12 and the retainer 30. There is also enhanced strength between the head 16a and the rest of the fastener 12a than there is between head 16 and the rest of fastener 12 as shown in Figure 1.

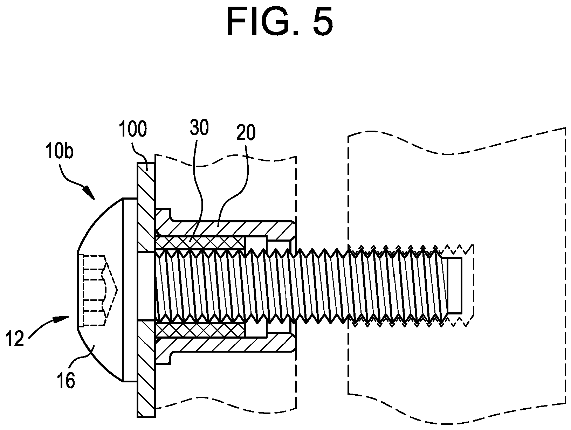

Figure 5 illustrates a fastener system 10b that is identical to fastener system 10 shown in Figure 1, but includes a washer 100 that is disposed under the head 16 of the fastener 12, specifically between the head 16 of the fastener 12 and the compression-limiting sleeve 20. The retainer 30 retains both the washer 100 and the compression limiting sleeve 20. The washer 100 functions to increase the surface area to reduce unit loading on the mating component.

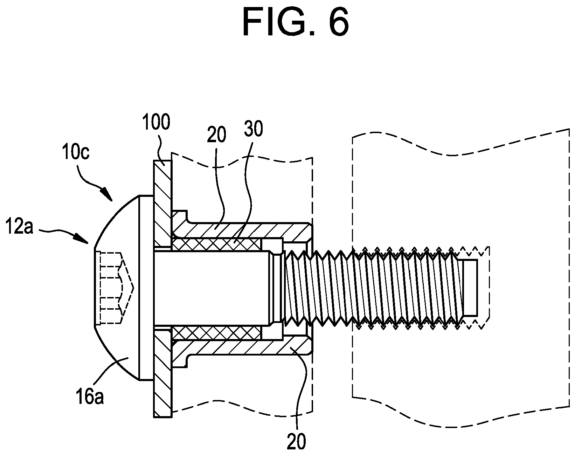

Figure 6 illustrates a fastener system 10c that is identical to fastener system 10a shown in Figure 4, but includes a washer 100 that is disposed under the head 16a of the fastener 12a, specifically between the head 16a of the fastener 12a and the compression-limiting sleeve 20. The retainer 30 retains both the washer 100 and the compression limiting sleeve 20. The fastener system 10c provides a lot of the same advantages of fastener system 10a (i.e., increased surface area between the fastener 12a and the retainer 30, and enhanced head strength), but the washer 100 also functions to increase the surface area to reduce unit loading on the mating component.

## Claims

1. A stand-alone, installable fastener system (10) comprising: a fastener (12) having a non-threaded portion (15a) and a threaded portion (13a); a compression-limiting sleeve (20) having an end surface (40); and a retainer (30) comprising a thermoplastic elastomer which engages the compression-limiting sleeve (20) and which comprises parallel internal walls which extend from one end of the retainer (30) to an opposite end of the retainer (30), wherein the parallel internal walls engage the non-thread portion (15a) on the fastener (12) such that the fastener (12) floats longitudinally to facilitate alignment pre-installation, wherein the retainer (30) comprises a first end (36) and a second end (38), wherein the compression-limiting sleeve (20) comprises a counter bore (26), wherein the retainer (30) engages the counter bore (26) of the compression-limiting sleeve (20) and the non-threaded portion (15a) of the fastener (12) such that the retainer (30) retains the compression-limiting sleeve (20) on the fastener (12), wherein the counter bore (26) comprises an internal shoulder (34), wherein a space (32) is provided between the internal shoulder (34) of the counter bore (26) of the compression-limiting sleeve (20) and the first end (36) of the retainer (30), said space (32) configured to provide that the second end (38) of the retainer (30) is disposed below the end surface (40) of the compression-limiting sleeve (20) after installation, the retainer (30) comprising a bore through which the fastener (12) extends, the retainer (30) is positioned between the fastener (12) and the compression-limiting sleeve (20), and the retainer (30) contacts the non-threaded portion (15a) of the fastener (12) and contacts the compression-limiting sleeve (20) along the entire length of the retainer (30).

2. A stand-alone, installable fastener system (10) as recited in claim 1, wherein the fastener (12) comprises a metal threaded fastener (12).

3. A stand-alone, installable fastener system (10) as recited in claim 1, wherein the fastener (12) comprises a head (16) having a recess (14) therein.

4. A stand-alone, installable fastener system (10) as recited in claim 1, wherein the compression-limiting sleeve (20) is metal.

5. A stand-alone, installable fastener system (10) as recited in claim 1, wherein the compression-limiting sleeve (20) has a lip (22) proximate the end surface (40).

6. A stand-alone, installable fastener system (10) as recited in claim 1, wherein the compression-limiting sleeve (20) is cold headed.

7. A stand-alone, installable fastener system (10) as recited in claim 1, wherein the fastener (12) comprises a head (16), wherein both the compression-limiting sleeve (20) and the retainer (30) contact the head (16) of the fastener (12).

8. A stand-alone, installable fastener system (10) as recited in claim 1, wherein the compression-limiting sleeve (20) has an interior surface, and the retainer (30) contacts the interior surface of the compression-limiting sleeve (20).

9. A stand-alone, installable fastener system (10) as recited in claim 1, wherein the fastener (12) comprises a head (16) and an end (42) which is opposite the head (16), wherein the end (42) of the fastener (12) extends past the end surface (40) of the compression-limiting sleeve (20), wherein both the compression-limiting sleeve (20) and the retainer (30) contact the head (16) of the fastener (12).

10. A stand-alone, installable fastener system (10) as recited in claim 1, wherein the fastener (12) comprises a head (16) and an end (42) which is opposite the head (16), wherein the end (42) of the fastener (12) extends past the end surface (40) of the compression-limiting sleeve (20), wherein both the compression-limiting sleeve (20) and the retainer (30) contact the head (16) of the fastener (12), wherein the compression-limiting sleeve (20) has an interior surface, and the retainer (30) contacts the interior surface of the compression-limiting sleeve (20).

11. A stand-alone, installable fastener system (10) as recited in claim 1, wherein the retainer (30) comprises parallel external walls which extend from the one end of the retainer (30) to the opposite end of the retainer (30), wherein the parallel external walls engage an internal surface of the compression-limiting sleeve (20).

12. A stand-alone, installable fastener system (10) as recited in claim 1, further comprising:
a washer (100), wherein the washer (100) and the compression limiting sleeve (20) are retained by the retainer (30).

## Patentansprüche

1. Eigenständiges, installierbares Befestigungssystem (10), umfassend: eine Befestigung (12) mit einem nicht mit Gewinde versehenen Abschnitt (15a) und einem mit Gewinde versehenen Abschnitt (13a); eine Druckbegrenzungshülse (20) mit einer Endfläche (40); und eine Halterung (30), umfassend ein thermoplastisches Elastomer, das in die Druckbegrenzungshülse (20) eingreift und umfasst parallele Innenwände, die sich von einem Ende der Halterung (30) zu einem gegenüberliegenden Ende der Halterung (30) erstrecken, wobei die parallelen Innenwände mit dem nicht mit einem Gewinde versehenen Abschnitt (15a) an der Befestigung (12) in Eingriff stehen, derart, dass die Befestigung (12) in Längsrichtung schwebt, um die Ausrichtung vor der Installation zu erleichtern, wobei die Halterung (30) ein erstes Ende (36) und ein zweites Ende (38) umfasst, wobei die Druckbegrenzungshülse (20) eine Senkbohrung (26) aufweist, wobei die Halterung (30) in die Senkbohrung (26) der Druckbegrenzungshülse (20) und den nicht mit Gewinde versehenen Abschnitt (15a) der Befestigung (12) eingreift, derart, dass die Halterung (30) die Druckbegrenzungshülse (20) an der Befestigung (12) hält, wobei die Senkbohrung (26) eine innere Schulter (34) umfasst, wobei zwischen der inneren Schulter (34) der Senkbohrung (26) der Druckbegrenzungshülse (20) und dem ersten Ende (36) der Halterung (30) ein Raum (32) bereitgestellt ist, wobei der erwähnte Raum (32) so konfiguriert ist, dass er bereitstellt, dass das zweite Ende (38) der Halterung (30) unterhalb der Endfläche (40) die Druckbegrenzungshülse (20) nach der Montage, die Halterung (30) umfassend eine Durchgangsbohrung, durch die sich die Befestigung (12) erstreckt, die Halterung (30) zwischen der Befestigung (12) und der Druckbegrenzungshülse (20) positioniert ist und die Halterung (30) den nicht mit einem Gewinde versehenen Abschnitt (15a) der Befestigung (12) berührt und die Druckbegrenzungshülse (20) entlang der gesamten Länge der Halterung (30) berührt.

2. Eigenständiges, installierbares Befestigungssystem (10) wie in Anspruch 1 beschrieben, wobei die Befestigung (12) eine Metallgewindebefestigung (12) umfasst.

3. Eigenständiges, installierbares Befestigungssystem (10) wie in Anspruch 1 beschrieben, wobei die Befestigung (12) einen Kopf (16) umfasst, der darin eine Aussparung (14) aufweist.

4. Eigenständiges, installierbares Befestigungssystem (10) wie in Anspruch 1 beschrieben, wobei die Druckbegrenzungshülse (20) aus Metall ist.

5. Eigenständiges, installierbares Befestigungssystem (10) wie in Anspruch 1 beschrieben, wobei die Druckbegrenzungshülse (20) einen Rand (22) in der Nähe der Endfläche (40) aufweist.

6. Eigenständiges, installierbares Befestigungssystem (10) wie in Anspruch 1 beschrieben, wobei die Druckbegrenzungshülse (20) kaltgeformt ist.

7. Eigenständiges, installierbares Befestigungssystem (10) wie in Anspruch 1 beschrieben, wobei die Befestigung (12) einen Kopf (16) umfasst, wobei sowohl die Druckbegrenzungshülse (20) als auch die Halterung (30) den Kopf (16) der Befestigung (12) berühren.

8. Eigenständiges, installierbares Befestigungssystem (10) wie in Anspruch 1 beschrieben, wobei die Druckbegrenzungshülse (20) eine Innenfläche aufweist und die Halterung (30) die Innenfläche der Druckbegrenzungshülse (20) berührt.

9. Eigenständiges, installierbares Befestigungssystem (10) wie in Anspruch 1 beschrieben, wobei die Befestigung (12) einen Kopf (16) und ein Ende (42) umfasst, das dem Kopf (16) gegenüberliegt, wobei sich das Ende (42) der Befestigung (12) über die Endfläche (40) der Druckbegrenzungshülse (20) hinaus erstreckt, wobei sowohl die Druckbegrenzungshülse (20) als auch die Halterung (30) den Kopf (16) der Befestigung (12) berühren.

10. Eigenständiges, installierbares Befestigungssystem (10) wie in Anspruch 1 beschrieben, wobei die Befestigung (12) einen Kopf (16) und ein Ende (42) umfasst, das dem Kopf (16) gegenüberliegt, wobei sich das Ende (42) der Befestigung (12) über die Endfläche (40) der Druckbegrenzungshülse (20) hinaus erstreckt, wobei sowohl die Druckbegrenzungshülse (20) als auch die Halterung (30) den Kopf (16) der Befestigung (12) berühren, wobei die Druckbegrenzungshülse (20) eine Innenfläche aufweist und die Halterung (30) die Innenfläche der Druckbegrenzungshülse (20) berührt.

11. Eigenständiges, installierbares Befestigungssystem (10) wie in Anspruch 1 beschrieben, wobei die Halterung (30) parallele Außenwände umfasst, die sich von dem einen Ende der Halterung (30) zu dem gegenüberliegenden Ende der Halterung (30) erstrecken, wobei die parallelen Außenwände mit einer Innenfläche der Druckbegrenzungshülse (20) in Eingriff stehen.

12. Eigenständiges, installierbares Befestigungssystem (10) wie in Anspruch 1 beschrieben, ferner umfassend: eine Unterlegscheibe (100), wobei die Unterlegscheibe (100) und die Druckbegrenzungshülse (20) durch die Halterung (30) gehalten werden.

## Revendications

1. Système de fixation autonome et installable (10), comprenant : un élément de fixation (12) présentant une partie non filetée (15a) et une partie filetée (13a) ; un manchon de limitation de compression (20) présentant une surface d'extrémité (40) ; et un élément de retenue (30) comprenant un élastomère thermoplastique qui est en prise avec le manchon de limitation de compression (20) et qui comprend des parois internes parallèles qui se prolongent d'une extrémité de l'élément de retenue (30) à une extrémité opposée de l'élément de retenue (30), dans lequel les parois internes parallèles sont en prise avec la partie non filetée (15a) de l'élément de fixation (12) de sorte que l'élément de fixation (12) flotte longitudinalement pour faciliter l'alignement avant l'installation, dans lequel l'élément de retenue (30) comprend une première extrémité (36) et une seconde extrémité (38), dans lequel le manchon de limitation de compression (20) comprend un contre-alésage (26), dans lequel l'élément de retenue (30) est en prise avec le contre-alésage (26) du manchon de limitation de compression (20) et la partie non filetée (15a) de l'élément de fixation (12) de sorte que l'élément de retenue (30) retient le manchon de limitation de compression (20) sur l'élément de fixation (12), dans lequel le contre-alésage (26) comprend un épaulement interne (34), dans lequel un espace (32) est fourni entre l'épaulement interne (34) du contre-alésage (26) du manchon de limitation de compression (20) et la première extrémité (36) de l'élément de retenue (30), ledit espace (32) étant configuré pour que la seconde extrémité (38) de l'élément de retenue (30) soit disposée sous la surface d'extrémité (40) du manchon de limitation de compression (20) après l'installation, l'élément de retenue (30) comprenant un alésage à travers lequel se prolonge l'élément de fixation (12), l'élément de retenue (30) est positionné entre l'élément de fixation (12) et le manchon de limitation de compression (20), et l'élément de retenue (30) est en contact avec la partie non filetée (15a) de l'élément de fixation (12) et est en contact avec le manchon de limitation de compression (20) sur toute la longueur de l'élément de retenue (30).

2. Système de fixation autonome et installable (10) selon la revendication 1, dans lequel l'élément de fixation (12) comprend un élément de fixation fileté en métal (12).

3. Système de fixation autonome et installable (10) selon la revendication 1, dans lequel l'élément de fixation (12) comprend une tête (16) présentant un évidement (14) en son sein.

4. Système de fixation autonome et installable (10) selon la revendication 1, dans lequel le manchon de limitation de compression (20) est métallique.

5. Système de fixation autonome et installable (10) selon la revendication 1, dans lequel le manchon de limitation de compression (20) présente une lèvre (22) proche de la surface d'extrémité (40).

6. Système de fixation autonome et installable (10) selon la revendication 1, dans lequel le manchon de limitation de compression (20) est frappé à froid.

7. Système de fixation autonome et installable (10) selon la revendication 1, dans lequel l'élément de fixation (12) comprend une tête (16), dans lequel le manchon de limitation de compression (20) et l'élément de retenue (30) sont tous deux en contact avec la tête (16) de l'élément de fixation (12).

8. Système de fixation autonome et installable (10) selon la revendication 1, dans lequel le manchon de limitation de compression (20) présente une surface intérieure, et l'élément de retenue (30) est en contact avec la surface intérieure du manchon de limitation de compression (20).

9. Système de fixation autonome et installable (10) selon la revendication 1, dans lequel l'élément de fixation (12) comprend une tête (16) et une extrémité (42) qui est opposée à la tête (16), dans lequel l'extrémité (42) de l'élément de fixation (12) se prolonge au-delà de la surface d'extrémité (40) du manchon de limitation de compression (20), dans lequel le manchon de limitation de compression (20) et l'élément de retenue (30) sont tous deux en contact avec la tête (16) de l'élément de fixation (12).

10. Système de fixation autonome et installable (10) selon la revendication 1, dans lequel l'élément de fixation (12) comprend une tête (16) et une extrémité (42) qui est opposée à la tête (16), dans lequel l'extrémité (42) de l'élément de fixation (12) se prolonge au-delà de la surface d'extrémité (40) du manchon de limitation de compression (20), dans lequel le manchon de limitation de compression (20) et l'élément de retenue (30) sont tous deux en contact avec la tête (16) de l'élément de fixation (12), dans lequel le manchon de limitation de compression (20) présente une surface intérieure, et l'élément de retenue (30) est en contact avec la surface intérieure du manchon de limitation de compression (20).

11. Système de fixation autonome et installable (10) selon la revendication 1, dans lequel l'élément de retenue (30) comprend des parois externes parallèles qui se prolongent de l'extrémité de l'élément de retenue (30) à l'extrémité opposée de l'élément de retenue (30), dans lequel les parois externes parallèles sont en prise avec une surface intérieure du manchon de limitation de compression (20).

12. Système de fixation autonome et installable (10) selon la revendication 1, comprenant également : une rondelle (100), dans lequel la rondelle (100) et le manchon de limitation de compression (20) sont retenus par l'élément de retenue (30).
